# EUROPEAN PATENT SPECIFICATION

(11) **EP 1 440 859 B1**
(45) Date of publication and mention of the grant of the patent: **04.10.2006**
(21) Application number: 03445014.8
(22) Date of filing: 24.01.2003
(51) Int. Cl.: B60T 7/06

(54) **Pedal arrangement**
Pedalanordnung
Agencement de pédale

(43) Date of publication of application: 28.07.2004
(73) Proprietor: Ford Global Technologies, Inc., Dearborn, MI 48126 (US)
(72) Inventor: Schwerdt, Heiko, 50769 Köln (DE); Johansson, Mattias, 417 16 Göteborg (SE); Crona, Ragnar, 436 38 Askim (SE); Nilsson, Krister, 414 74 Göteborg (SE); Lundgrun, Fredrik, 448 36 Floda (SE)
(74) Representative: Andersson, Per Rune

(56) References cited:
- EP-A- 0 847 900
- EP-A- 0 983 918
- EP-A- 1 106 458
- US-A- 6 089 119
- US-A- 6 089 342
- US-B1- 6 408 711

## Description

### TECHNICAL FIELD:

The present invention relates to a vehicle according to the preamble of claim 1 the technical features of the preamble being substantially known from document EP 0 983 918 A2.

### BACKGROUND ART:

In a vehicle, for example a car, a set of pedals is used in order to allow a driver to operate the vehicle. Said set of pedals normally consists of a brake pedal, a clutch pedal and an accelerator pedal or, in the case of vehicles having an automatic transmission, a brake pedal and an accelerator pedal.

A brake pedal of conventional type comprises a pivotally arranged brake pedal arm with a pedal plate which can be actuated by the driver by pressing with a foot. Furthermore, the brake pedal arm is normally connected to a brake booster, via a pushrod which extends through an opening in a firewall of the vehicle in question. By pressing the brake pedal, the brake booster is actuated so as to facilitate braking of the vehicle.

It is previously known that a pedal arrangement such as a brake pedal arrangement which is connected to a brake booster implies a serious risk for the driver in the event of a frontal collision. More precisely, an impact force acting on the front portion of the vehicle during a frontal collision will be transferred to the brake booster and further, via the pushrod, to the brake pedal arm. As a result, the brake pedal arm will be forced in a manner so that it pivots in a direction towards the driver's feet. This may result in serious injury to the driver's feet or legs when the brake pedal plate comes into contact with the feet. The risk for injury is particular high as regards brake pedals, since it often can be expected that the driver's right foot is positioned on the brake pedal during the collision in order to brake the vehicle.

In order to solve the above-mentioned problem and reduce the risk for injury to the driver's feet in the event of a collision, several types of safety arrangements have been developed, in order to prevent the brake pedal arm from moving backward in the vehicle.

The patent document US 6408711 teaches an arrangement in which a brake pedal arm is provided with a stopper element. By means of the stopper element, a pivotal movement of the brake pedal arm can be restricted to an initial position before it reaches the driver's feet. This is obtained due to the fact that the stopper element cooperates with a stopper bracket which is fixed to a brake pedal bracket so as to receive the stopper element. In this manner, the pedal arm is prevented from moving backward so as to cause injuries.

Furthermore, the patent document US 6089119 teaches a pedal arrangement in which a brace, which is arranged in a transversal manner in a vehicle, supports a rigid force-transmitting element. Said force-transmitting element is arranged so as to move the brake pedal arm forwards in the vehicle in the event of a frontal impact to the vehicle.

Although the above-mentioned known arrangements are adapted so as to prevent a brake pedal arm from being forced towards the driver in the event of a frontal collision, there is still a demand for further improved pedal arrangements, in particular in the form of simple and cost-effective devices which can easily be integrated in vehicles and which reduce the risk for injury to the driver's feet.

### DISCLOSURE OF INVENTION:

An object of the present invention is consequently to provide an improved pedal arrangement, in particular for a brake pedal in a vehicle, by means of which a high degree of safety for the driver can be obtained.

In accordance with the invention, this object is accomplished by means of a vehicle according to claim 1.

By means of the invention, certain advantages are accomplished. Firstly, it can be noted that the invention provides a high degree of safety by preventing the pedal arm from reaching the driver's feet in the event of a collision, thereby reducing the risk for feet and leg injuries. Furthermore, the invention is based on the fact that an existing structural beam element can be used for limiting a displacement of the pedal arm.

Another advantage relates to the fact that the invention constitutes a simple and cost-effective solution which also uses an existing beam structure in a vehicle in order to provide a reduced risk for injury to the driver's feet.

According to a particular embodiment of the invention, the pedal arm is pivotally arranged in a pedal bracket structure which is shaped with a weakened section. In this manner, the pivoting axis of the pedal arm can be moved even further backward in the vehicle during impact. This contributes further to the fact that the pedal arm is prevented from reaching the driver's feet.

### BRIEF DESCRIPTION OF DRAWINGS:

In the following, the invention will be described in detail with reference to the attached drawings. These drawings are used for illustration only and do not in any way limit the scope of the invention. In the drawings:
- Fig. 1: is a perspective view of a brake pedal arrangement for a vehicle, in accordance with the present invention;
- Fig. 2a: is a simplified, schematical side view of the brake pedal arrangement according to the present invention, in a first position prior to a frontal collision involving said vehicle;
- Fig. 2b: is a view generally corresponding to Fig. 2a but showing the brake pedal arrangement according to the invention in a second position during said frontal collision; and
- Fig. 2c: is a view corresponding to Figs. 2a and 2b but showing the brake pedal arrangement according to the invention in a third position during a frontal collision.

### PREFERRED EMBODIMENT:

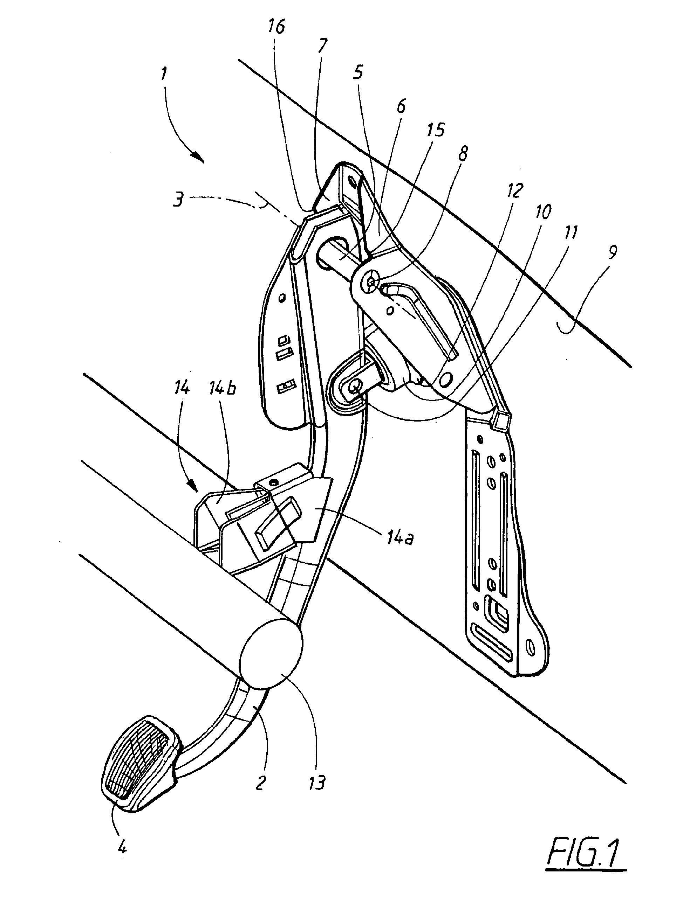

In the following, an embodiment of a pedal arrangement according to the present invention will be described in detail. With reference to Fig. 1, there is shown a perspective view of a brake pedal arrangement 1, which according to said embodiment is arranged in a conventional manner in the lower, front section of a motor vehicle's passenger compartment. The brake pedal arrangement 1 comprises a brake pedal arm 2 which is pivotally arranged about a pivoting axis 3. Also, the lower part of the brake pedal arm 2 carries a pedal plate 4. The pivoting axis 3 is defined by means of a tubular part 5 provided in the upper part of the brake pedal arm 2, which tubular part 5 forms a shaft which is supported in a first pedal bracket 6 and a second pedal bracket 7 for allowing the pivotal movement of the brake pedal arm 2. Said brackets 6, 7 are arranged on each side of the brake pedal arm 2. In particular, the first pedal bracket 6 is provided with a first bracket hole 8 and the second pedal bracket 7 is provided with a second bracket hole (not shown) in which the tubular part 5 is mounted.

The pedal brackets 6, 7 are mounted in a firewall 9 of the vehicle. In a manner which is known per se, the firewall 9 is arranged in the front section of the vehicle in question, in order to divide the lower part of the passenger compartment from the engine compartment.

The invention will be described with reference to an embodiment comprising a brake pedal arrangement 1 which is arranged to be connected to a brake booster (not shown) in the vehicle, via a pushrod 10. The pushrod 10 is fastened in a pivotal manner in a hole 11 in the pedal arm 2. In order to connect the pushrod 10 to said brake booster, the pushrod 10 extends through an opening 12 in the firewall 9 and further to the brake booster.

According to the embodiment, the invention is intended to be used in a vehicle having a so-called cross tube 13, which is a rigid, structural beam structure which extends between the side sections of the vehicle, more precisely between its so-called A-pillars (not shown). In most of today's cars, the A-pillars are normally defined on each side of the vehicle in the area in which the left and right front doors of the vehicle are mounted. The cross tube 13, which consequently extends in a direction which is generally transverse to the longitudinal direction of the vehicle, is schematically indicated by means of broken lines in Fig. 1.

Due to the fact that the cross tube 13 is rigid, it can be used as a structural beam structure which, together with the A-pillar and the remaining parts of the vehicle chassis, forms a closed support structure which provides a high degree of rigidity and stability to the vehicle. Such an arrangement is previously known from the patent document US 2002/0093221 A1. Also, the cross tube 13 is preferably used as a support for various components related to the dashboard and the steering column of the vehicle. For example, a steering column may be arranged so that it rests upon the cross tube 13. It should be noted that the cross tube 13 should be positioned at a relatively low height above the floor of the vehicle. In contrast to the arrangement with the cross tube 13 shown in Fig. 1, previously known transversal cross tubes in today's cars are normally arranged at a relatively high level above the vehicle floor. Such a mounting of the cross tube also allows mounting of dashboard components and a steering column, but in a manner so that for example the steering column hangs down from the cross tube, by means of a suitable mounting device.

The present invention relies on the insight that a vehicle chassis structure including two A-pillars which are mechanically connected by means of the low-level cross tube 13 can be made to cooperate with a brake pedal arrangement 1 such as that shown in Fig. 1. This will be described in greater detail below.

If the cross tube 13 is sufficiently low (i.e. at a suitable height above the floor), it may cooperate with the brake pedal in a manner so that the brake pedal may be prevented from being forced rearwards in the vehicle and cause injuries to the driver of the vehicle. In order to obtain this purpose, the invention comprises a stop element 14, which is constituted by a relatively small bracket-like component which is attached to the brake pedal arm 2. The stop element 14 consists of an attachment section 14a which is arranged to be attached to the brake pedal arm 2, and a stopper section 14b which is arranged to come into contact with the cross tube 13 in the event that the brake pedal arm 2 is forced backward during for example a frontal collision.

The stop element 14 is arranged at a position at a small distance in front of the cross tube 13 (i.e. on the side of the cross tube 13 which faces the front portion of the vehicle) and at generally the same height as the cross tube 13. Preferably, the stop element 14 is attached at a position along the brake pedal arm 2 which corresponds to approximately half its length. However, the precise position of the stop element 14 may vary, for example depending on the position of the cross tube 13, the position of the pedal brackets 6, 7 and the dimensions of the firewall 9. According to the invention, the position where the stop element 14 is mounted along the brake pedal arm 2 corresponds to a position which results in that the stop element 14 can be expected to come into contact with the cross tube 13 if the brake pedal arm 2 were to be pivoted in a direction towards the cross tube 13, for exemple in the event of a frontal collision.

Furthermore, as shown in Fig. 1, the first pedal bracket 6 is shaped with a weakened section which is defined by an indentation or recess 15 which is positioned in the upper portion of the first pedal bracket 6. Preferably, the recess 15 is positioned in a portion of the first pedal bracket 6 which is located above the pivoting axis 3. The second pedal bracket 7 is shaped in a similar manner as the first pedal bracket 6, i.e. with a further recess 16 of generally the same type as the above-mentioned recess 15 in the first pedal bracket 6. As will be described in greater detail below, the purpose of the recesses 15, 16 is to allow the first and second pedal brackets 6, 7 to be slightly deformed and thereby allowing the pivoting axis 3 to move backward in the vehicle during certain situations. As a result, the lower part of the pedal arm 2 is displaced a certain distance in the forward direction of the vehicle so as to be prevented from reaching the feet of the driver.

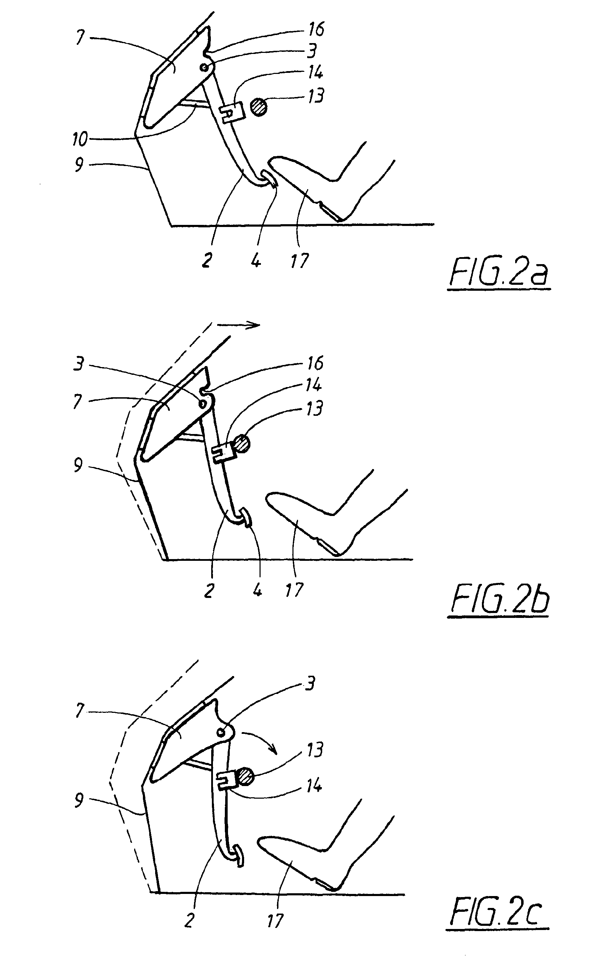

The invention will now be described in greater detail with reference to Figs. 2a, 2b and 2c which illustrate a situation involving a frontal collision. Fig. 2a is a slightly simplified side view which shows the brake pedal arrangement 1 according to the invention in a first position at a point of time just before the frontal collision, i.e. just before the impact force resulting from the collision forces the firewall 9 to move backward in the vehicle. Figs. 2b and 2c show the brake pedal arrangement 1 in a second and a third position during such a collision.

With reference to Fig. 2a, it can be noted that the brake pedal arrangement 2 is arranged so that the pedal plate 4 is positioned just in front of the expected position of the feet 17 of the driver. Obviously, it is also possible that the driver has positioned the right foot on the brake pedal plate 4. Also, it is evident from Fig. 2a that the stop element 14 on the brake pedal arm 2 is adapted to the position of the existing cross tube 13 so that it is mounted on the brake pedal arm 2 a small distance in front of the cross tube 13. Also, the stop element 14 is positioned along the brake pedal arm 2 at a position which generally corresponds to the height of the cross tube 13 so that it can be expected to hit the front side of the cross tube 13 upon impact.

In the event of a frontal collision, it can be expected that the front section of the vehicle will be deformed and forced backward, i.e. in a direction towards the driver of the vehicle. This means that the firewall 9 will move with reference to the position of the two A-pillars (not shown) on each side of the vehicle. It has been noted that during a frontal collision of a car of conventional type, the positions of the A-pillars are normally not affected to a very high degree. Due to the fact that the cross tube 13 is mechanically coupled to the A-pillars, the cross tube 13 will consequently remain at a generally unchanged position when the firewall 9 moves a certain distance backward, i.e toward the position of the A-pillars and the cross tube 13. This is indicated in Fig. 2b.

Also, during a frontal collision, it can be expected that the impact force acting on the front section of the vehicle will be distributed to the brake booster. This means that the pushrod 10 which connects the brake booster to the brake pedal arm 2 will transfer a relatively high force to the brake pedal arm 2. As a result, the brake pedal arm 2 will be urged in a direction towards the feet 17 of the driver. As mentioned initially, this may cause injury to the driver's feet 17.

The initial position of the firewall 9 is indicated by means of broken lines in Fig. 2b. Following the frontal impact, the firewall 9 will move a certain distance towards the rear of the vehicle and consequently towards the cross tube 13. The direction of intrusion of the firewall 9 is indicated by means of an arrow in Fig. 2b. Also, the brake pedal arm 2 will be affected backward by the pushrod 10. Eventually, the brake pedal arm 2 will reach a position in which the stop element 14 hits the cross tube 13. In Fig. 2b, the brake pedal arrangement 1 is shown in a position in which the stop element 14 is in contact with the front side of the cross tube 13.

When the stop element 14 comes into contact with the cross tube 13, the pedal arm 2 will be prevented from moving further backward, i.e. the pedal plate 4 is prevented from moving further toward the driver's feet 17. Instead, the brake pedal arm 2 will continue to move pivotally about the imaginary pivoting axis which is defined by the contact point between the stop element 14 and the cross tube 13. As a result of this pivoting movement, the pedal arm 2 and the pedal plate 4 will be forced away from the position where it can be expected that the driver's feet 17 are located. In this manner, the risk for injury of the feet can be reduced or even eliminated by means of the invention.

Preferably, the stop element 14 is arranged in a manner so that it will never overload the cross tube. This means that the shape, material and dimensions of the stop element 14 are chosen so that when the force acting upon the cross tube 13 by the stop element 14 exceeds a certain value, the stop element 14 will yield and be deformed. The cross tube 13, on the other hand, will remain essentially unchanged in such a situation.

If the impact force during the collision is very high, the firewall 9 will be forced even further rearwards in the vehicle, as shown in Fig. 2c. Due to the fact that the stop element 14 is in contact with the cross tube 13, the upper part of the pedal arm 2 still urges to continue its pivoting movement about the contact point between the stop element 14 and the front side of the cross tube 13. This is indicated by means of a curved arrow in Fig. 2c. As a result of this force acting on the upper part of the pedal arm 2 and its pivoting axis 3, the recesses 15, 16 in the first and second pedal brackets 6, 7 will eventually cause said pedal brackets 6, 7 to be deformed. This means that the recesses 15, 16 will be "stretched out", thereby allowing the pivoting axis 3 to move a certain distance further backward in the vehicle. Due to this pivoting, the lower part of the pedal arm 2 will move a certain distance further away from the position of the driver's feet 17. In other words, the deformations provided by the recesses 15, 16 in the first and second pedal brackets 6, 7 constitute a further improvement of the invention since it allows the brake pedal to be moved even further away from the driver's feet 17. This is also accomplished due to the fact that the pivoting axis 3 for the pedal arm 2 is located higher than the cross tube 13.

In summary, by means of the invention there is provided an arrangement in which the brake pedal arm 2 is prevented from moving further than what is defined by the position of the cross tube 13, i.e. the cross tube 13 will stop the movement of the pedal arm 2 when the stop element 14 hits the front side of the cross tube 13. When the firewall 9 moves rearwards in the vehicle, the lower part of the pedal arm 2 will move away from the driver's feet. This leads to a high degree of safety as regards the risk for injuries to the driver. An even higher degree of safety is provided by means of the weakening recesses 15, 16, due to the fact that said recesses 15, 16 will yield so as to allow the pivoting point 3 to move backward in case the force acting on the firewall 9 is very high.

With reference to Fig. 1, it can be noted that the stop element 14 is constituted by a generally U-shaped or V-shaped stopper section 14b which is arranged so as to contact the front side of the cross tube 13. The dimensions and shape of the stopper section 14b may vary within the scope of the invention. For example, the stopper section may alternatively be formed as a generally triangular cross-section, or with a rectangular or square cross-section. Furthermore, the length of the stopper section 14b is preferably adapted to the maximum allowed pivotal movement of the brake pedal arm 2, and also to the actual position of the cross tube 13 and the firewall 9. Also, the stopper section 14b is preferably designed as a deformation element which will yield if the force acting on the cross tube exceeds a certain value.

The invention is not limited to the embodiment described, but can be modified within the scope of the appended claims. The invention is particularly suitable to implement in those vehicles in which there is a cross tube positioned at relatively low height, as described above.

Furthermore, the invention is not limited to being used for brake pedals, but can generally be used for all types of pedal arrangements in vehicles in which there is a risk for injuries during collisions. For example, the principles of the invention can equally well be used for a clutch pedal.

## Claims

1. Vehicle comprising a structure (13) serving as a support for components in the vehicle, a pedal arrangement (1) comprising a pedal arm (2) being pivotally arranged in a pedal bracket structure (6, 7) which defines a pivoting axis (3) for said pedal arm (2) and which is adapted to be fixedly mounted in said vehicle, and a stop element (14) mounted on said pedal arm (2) so that it faces the rear direction of said vehicle, wherein stop element (14) is mounted on the pedal arm (2) at a position in front of said structure (13) which is chosen so that, in the event of a collision, said stop element (14) comes into contact with said structure (13) for preventing said pedal (2) arm to move backward in said vehicle **characterised in that** said structure is a structural beam structure (13) extending generally transverse in the vehicle that extends between two A-pillars positioned on each side of the vehicle, said A-pillars being mechanically connected by means of said beam structure (13).

2. Vehicle according to claim 1, **characterized in that** it comprises a firewall (9) in which said pedal bracket structure (6, 7) is mounted.

3. Vehicle according to any one of claims 1 or 2 **characterized in that** said pedal bracket structure (6, 7) defines a pivoting axis (3) for said pedal arm (2) which is located higher than said beam structure (13).

4. Vehicle according to any one of claims 1-3, **characterized in that** said beam structure (13) is arranged at a height which is sufficiently low for it to serve as a support for a dashboard resting on said beam structure (13).

5. Vehicle according to any one of the preceding claims, **characterized in that** said stop element (14) is mounted on said pedal arm (2) so as to be positioned a small distance in front of the beam structure (13) and at generally the same height as said beam structure (13).

6. Vehicle according to any one of the preceding claims, **characterized in that** said stop element (14) comprises an attachment section (14a) arranged to be attached to the pedal arm (2), and a stopper section (14b) arranged to come into contact with said beam structure (14).

7. Vehicle according to claim 6 **characterized in that** said stopper section (14b) is generally V- or U-shaped, or shaped as a triangular, rectangular or square box, one side of said box being adapted for contacting said beam structure (13).

8. Vehicle according to any one of the preceding claims, **characterized in that** the pedal bracket structure (6, 7) defines a weakened section (15, 16) allowing the pedal bracket structure (6, 7) to be deformed upon impact so that the pivoting axis (3) is allowed to be displaced.

9. Vehicle according to claim 8, **characterized in that** said weakened section (15, 16) is constituted by at least one recess (15, 16) in the material forming said pedal bracket structure (6, 7).

10. Vehicle according to any one of the preceding claims, **characterized in that** the pedal arrangement (1) is constituted by a brake pedal arrangement.

## Patentansprüche

1. Fahrzeug, mit einer Struktur (13), die als eine Stütze für Bauteile in dem Fahrzeug dient, einer Pedalanordnung (1), die einen Pedalarm (2) aufweist, der in einer Pedalkonsolenstruktur (6, 7) schwenkbar angeordnet ist, die eine Schwenkachse (3) für den Pedalarm (2) bildet und die im Fahrzeug fest angebracht werden kann, und einem Anschlagelement (14), das an dem Pedalarm (2) so angebracht ist, dass es bezogen auf das Fahrzeug der Richtung nach hinten zugewandt ist, wobei das Anschlagelement (14) an dem Pedalarm (2) in einer Position vor der Struktur (13) angebracht ist, die so gewählt ist, dass im Falle eines Zusammenstoßes das Anschlagelement (14) mit der Struktur (13) in Berührung kommt, um zu verhindern, dass sich der Pedalarm (2) im Fahrzeug nach hinten bewegt, **dadurch gekennzeichnet, dass** die Struktur eine strukturelle Trägerstruktur (13) ist, die sich im Allgemeinen quer im Fahrzeug erstreckt und die sich zwischen zwei A-Säulen erstreckt, die an jeder Seite des Fahrzeugs angeordnet sind, wobei die A-Säulen mittels der Trägerstruktur (13) mechanisch verbunden sind.

2. Fahrzeug nach Anspruch 1, **dadurch gekennzeichnet, dass** es eine Spritzwand (9) aufweist, an der die Pedalkonsolenstruktur (6, 7) angebracht ist.

3. Fahrzeug nach einem der Ansprüche 1 oder 2, **dadurch gekennzeichnet, dass** die Pedalkonsolenstruktur (6, 7) eine Schwenkachse (3) für den Pedalarm (2) festlegt, die höher als die Trägerstruktur (13) angeordnet ist.

4. Fahrzeug nach einem der Ansprüche 1-3, **dadurch gekennzeichnet, dass** die Trägerstruktur (13) in einer Höhe angeordnet ist, die ausreichend niedrig ist, dass sie als eine Stütze für ein Armaturenbrett dient, das an der Trägerstruktur (13) aufliegt.

5. Fahrzeug nach einem der vorhergehenden Ansprüche, **dadurch gekennzeichnet, dass** das Anschlagelement (14) an dem Pedalarm (2) so angebracht ist, dass es in einem kleinen Abstand vor der Trägerstruktur (13) und im Allgemeinen in der gleichen Höhe wie die Trägerstruktur (13) angeordnet ist.

6. Fahrzeug nach einem der vorhergehenden Ansprüche, **dadurch gekennzeichnet, dass** das Anschlagelement (14) einen Befestigungsabschnitt (14a), der zur Befestigung an dem Pedalarm (2) dient, und einen Anschlagabschnitt (14b) aufweist, der so angeordnet ist, dass er mit der Trägerstruktur (13) in Berührung kommt.

7. Fahrzeug nach Anspruch 6, **dadurch gekennzeichnet, dass** der Anschlagabschnitt (14b) im Allgemeinen V- oder U-förmig ist oder als dreieckiger, rechteckiger oder quadratischer Kasten gestaltet ist, wobei eine Seite des Kastens einer Berührung der Trägerstruktur (13) dient.

8. Fahrzeug nach einem der vorhergehenden Ansprüche, **dadurch gekennzeichnet, dass** die Pedalkonsolenstruktur (6, 7) einen geschwächten Abschnitt (15, 16) aufweist, der es gestattet, dass die Pedalkonsolenstruktur (6, 7) bei einem Aufprall deformiert wird, sodass die Schwenkachse (3) verschoben werden kann.

9. Fahrzeug nach Anspruch 8, **dadurch gekennzeichnet, dass** der geschwächte Bereich (15, 16) durch mindestens eine Aussparung (15, 16) in dem Material gebildet ist, die die Pedalkonsolenstruktur (6, 7) bildet.

10. Fahrzeug nach einem der vorhergehenden Ansprüche, **dadurch gekennzeichnet, dass** die Pedalanordnung (1) eine Bremspedalanordnung ist.

## Revendications

1. Véhicule comprenant une structure (13) servant de support pour des composants dans le véhicule, un mécanisme de pédale (1) comprenant un bras de pédale (2) agencé de façon pivotante dans une structure de support de pédale (6, 7), laquelle définit un axe de pivotement (3) pour ledit bras de pédale (2) et laquelle est adaptée pour être fixée dans ledit véhicule, ainsi qu'un élément d'arrêt (14) monté sur ledit bras de pédale (2) de manière à faire face à la direction arrière dudit véhicule dans lequel ledit élément d'arrêt (14) est monté sur le bras de pédale (2) dans une position en avant de ladite structure (13) laquelle est sélectionnée de façon à ce que, en cas de collision, ledit élément d'arrêt (14) vienne en contact avec ladite structure (13) pour empêcher ledit bras de pédale (2) de se déplacer vers l'arrière dudit véhicule, ***caractérisé* en ce que** ladite structure est une structure en poutre (13), s'étendant généralement de façon transversale dans le véhicule entre deux piliers en A positionnés sur chaque coté du véhicule, lesdits piliers en A étant mécaniquement connectés au moyen de ladite structure en poutre (13).

2. Véhicule selon la revendication 1, ***caractérisé* en ce qu'**il comprend un tablier ignifuge (9) dans lequel est montée ladite structure de support de pédale (6, 7).

3. Véhicule selon l'une des revendications 1 ou 2, ***caractérisé* en ce** la structure de support de pédale (6,7) définit un axe de pivotement (3) pour ledit bras de pédale (2) situé au-dessus de ladite structure en poutre (13).

4. Véhicule selon l'une des revendications 1 à 3, ***caractérisé* en ce que** ladite structure en poutre (13) est agencée à une hauteur suffisamment basse pour servir de support à une planche de bord reposant sur ladite structure (13).

5. Véhicule selon l'une des revendications précédentes, ***caractérisé* en ce que** l'élément d'arrêt (14) est monté sur le bras de pédale (2) de façon à être positionné à courte distance de l'avant de la structure en poutre (13) et globalement à la même hauteur que ladite structure (13).

6. Véhicule selon l'une des revendications précédentes, ***caractérisé* en ce que** l'élément d'arrêt (14) comprend une section de fixation (14a) agencée de façon à être fixée au bras de pédale (2), ainsi qu'une section d'arrêt (14b) agencée pour venir en contact avec ladite structure en poutre (13).

7. Véhicule selon la revendication 6, ***caractérisé* en ce que** ladite section d'arrêt (14b) présente globalement une forme en V ou en U ou une forme de boîte triangulaire, rectangulaire ou carrée, l'une des faces de ladite boîte étant adaptée de façon à entrer en contact avec ladite structure en poutre (13).

8. Véhicule selon l'une des revendications précédentes, ***caractérisé* en ce que** la structure des supports de pédale (6,7) définit une section de moindre résistance (15,16) permettant à la structure de support de pédale (6,7) d'être déformée lors d'un impact de façon à ce que l'axe de pivotement (3) soit autorisé à se déplacer.

9. Véhicule selon la revendication 8, ***caractérisé* en ce que** la section de moindre résistance (15,16) est constituée par au moins un renfoncement (15,16) dans le matériau formant la structure de support de pédale (6,7).

10. Véhicule selon l'une des revendications précédentes, ***caractérisé* en ce que** le mécanisme de pédale (1) est constitué par un assemblage de pédale de frein.
